**Europäisches Patentamt**

**European Patent Office**

**Office européen des brevets**

(11) Veröffentlichungsnummer: **0 227 876**
**B1**

(12) **EUROPÄISCHE PATENTSCHRIFT**

(45) Veröffentlichungstag der Patentschrift:
02.05.90

(51) Int. Cl.⁴: **C04B 28/14**
// (C04B28/14, 14:28, 24:06, 24:26, 24:38)

(21) Anmeldenummer: 86101958.6

(22) Anmeldetag: 15.02.86

(54) Kantenausbildung und Fugenfüller zum Verspachteln einer durch das Aneinanderstossen zweier solcher Kanten gebildeten Fuge.

(30) Priorität: 29.11.85 DE 3542262

(43) Veröffentlichungstag der Anmeldung:
08.07.87 Patentblatt 87/28

(45) Bekanntmachung des Hinweises auf die Patenterteilung:
02.05.90 Patentblatt 90/18

(84) Benannte Vertragsstaaten:
AT BE CH DE FR IT LI LU NL

(56) Entgegenhaltungen:
EP-A- 0 094 507
FR-A- 1 029 888
FR-A- 1 414 274
GB-A- 2 048 235

(73) Patentinhaber: **Rigips GmbH, Rühler Strasse,
D-3452 Bodenwerder(DE)**

(72) Erfinder: **Rennen, Heinz, Dr., Im Junkersgrund 25,
D-3452 Bodenwerder(DE)**
Erfinder: **Herzig, Hans-Dirk, Mühlenberg 2,
D-3457 Eschershausen(DE)**
Erfinder: **Scholze, Richard D., Dipl.-Ing., An den
Ziegeleien 26, D-3520 Hofgeismar(DE)**
Erfinder: **Gutacker, Herbert, Brückenstrasse 4,
D-3451 Luerdissen(DE)**
Erfinder: **Hilscher, Gerald, Chem.-Ing., Schiller
Strasse 51, D-3280 Bad Pyrmont(DE)**

(74) Vertreter: **Rücker, Wolfgang, Dipl.-Chem.,
Hubertusstrasse 2, D-3000 Hannover 1(DE)**

## Beschreibung

Die Erfindung betrifft eine Kantenausbildung und einen Fugenfüller unter Verwendung von Alpha-Gips zum Verspachteln einer durch das Aneinanderstoßen zweier solcher Kanten gebildeten Fuge von sogenannten Gipskartonplatten.

Seit längerer Zeit werden Gipskartonplatten gemäß DIN 18180 in größeren Mengen hergestellt und zur Herstellung von Wänden in einfacher oder doppelter Ständerausführung als Vorsatzschalen, Decken und zum Zwecke des Brandschutzes als Montagewände und dgl. mehr eingesetzt. Die Fertigung erfolgt kontinuierlich auf entsprechenden Maschinen, wobei der Karton, der die Ansichtsseite der Gipskartonplatte bildet, von einem großen Rollenvorrat abgezogen, zu einer den Gipsbrei aufnehmenden flachen, rechteckigen Wanne geformt wird, die hochstehenden Kartonränder bei der Kalibrierung der Platte auf die freie Oberfläche des Gipsbreies niedergedrückt, wonach schließlich der Rückseitenkarton aufgebracht und nach Einsetzen des Abbindevorganges der Plattenstrang auf bestimmte Längen geschnitten wird.

Bei der Herstellung der Platte werden also die seitlichen, in Fertigungsrichtung verlaufenden Ränder der Gipskartonplatte in bestimmter Weise geformt. Die Form dieser Kanten der Gipskartonplatte ist wichtig, weil die Gipskartonplatte meistens so verarbeitet wird, daß die Längsseiten vertikal stehen, weil man aus Rationalisierungsgründen vorzugsweise geschoßhohe Platten verwendet, aber aus praktischen Gründen die Plattenbreite beschränkt ist, so daß eine Wand nur durch Aneinanderstoßen mehrerer Platten mit ihren Längskanten herzustellen ist. Es wird verlangt, daß die sich bildende Stoßfuge verspachtelt wird, die Platten fest miteinander verbindet und rißfrei bleibt.

Die Querschnittsform dieser Längskanten der Gipskartonplatten wurde unterschiedlich gebildet, und zwar abgeflacht, voll, rund, winkelförmig, rund mit Abflachung und keilförmig (Hanusch, "Gipskartonplatten", S.23).

Es ist auch eine viertelkreisförmige Kante aus der DE-OS 32 18 397 und aus der US-PS 34 35 582 bekannt geworden, und bekannt sind auch abgeflachte viertelkreisförmige Kanten, die mit unterschiedlichen Krümmungsradien gestaltet sind (FR-PS 534 262).

In größerem Umfang verwendet wurde die sogenannte abgeflachte Kante. Recht zufrieden ist man indessen wohl mit den Kantenausgestaltungen bisher nicht gewesen, denn es gab immer wieder neuere Vorschläge, beispielsweise die der DE-OS 32 18 397, die nun die Probleme auch dadurch beseitigen will, daß man den Fugenfüller aus fast reinem Alpha-Gips herstellt ohne weitere Zusätze, wie Polyvinylalkohol, Asbest oder Bentonit und das Anmachwasser/Feststoff-Verhältnis auf maximal 0,5 einstellt. Dem Alpha-Fugenfüller können dann aber auch noch Füllstoffe zugesetzt werden in beschränktem Umfang. Die viertelkreisförmige Ausgestaltung der Kante und die Verwendung von Alpha-Kalziumsulfat-Halbhydrat ist aber ebenfalls bekannt.

All diese verschiedenen Kantenausbildungen, die zu Fugen führten, die mit herkömmlichem Spachtel verstrichen wurden, waren aber immer wieder bei der Herstellung einer Gipskartonplattenwand mit Nachteilen behaftet. Unumgänglich und nicht vermeidbar sind Kräfte, die auf die Fuge einwirken, die sich durch mechanische oder thermisch verursachte Spannungen ergeben, die sowohl als Zug-, aber auch als Druckkräfte auf die Fuge einwirken und zu Rissen in der Spachtelmasse selbst oder an den Grenzflächen zwischen Spachtelmasse und Karton führen.

Ein weiterer Nachteil ist der, daß die Menge der in die Fuge eingearbeiteten Spachtelmasse von Bedeutung ist, weil die Spachtelmasse entweder, je nach ihrer Zusammensetzung, sich hervorwölbt, auch wenn unmittelbar nach der Glättung das nicht erkennbar ist, jedoch mit fortschreitender Wasseraufnahme des Halbhydrats auftritt oder die Spachtelmasse sackt ein, so daß sich eine ganz flache Mulde ergibt. Diese Erscheinungen sind zwar nicht unmittelbar als konstruktiver Nachteil zu werten. Sie stören jedoch das gesamte Bild, und Wände dieser Art nimmt der Markt nicht an.

Gerade was die Menge der verarbeiteten Spachtelmasse in der Fuge anbelangt, so hat sich gezeigt, daß dies naturgemäß von der Ausgestaltung der Fuge abhängt, je größer die Masse, umso größer auch die Auswölbung oder die Gefahr der Rißbildung bei relativ geringer Kartonoberfläche, die mit der Spachtelmasse in Berührung kommt. Es hat sich also die Erkenntnis durchgesetzt, daß Fugenfüller für die Fuge und Ausbildung bzw. Querschnittsform, also Gestalt der Längskante der Platte, in einer gewissen, sich gegenseitig beeinflussenden Wechselwirkung stehen, von der die Güte der Fuge beeinflußt wird.

Der Erfindung liegt daher die Aufgabe zugrunde, eine Gipskartonplatte mit einer Längskantenausgestaltung bzw. Form oder Kontur zu schaffen, die mit einem speziell darauf abgestimmten Fugenfüller verspachtelt wird, wenn durch Aneinanderstoßen zweier solcher Längskanten eine Fuge entsteht.

Gelöst wird das Problem durch die in den Ansprüchen angegebene Ausgestaltung.

Durch die Verwendung der Kombination aus andickenden, wasserhaltenden Mitteln und dem Stärkeäther sowie des Polyvinylalkohols und des Dispersionspulvers erhält die gesamte Fugenfüllermischung zusätzliche wertvolle Eigenschaften, die sowohl für die Verarbeitung als auch später für den Erhalt der Fuge, für die Rißfreiheit und das Erscheinungsbild von Bedeutung sind. Der Fugenfüller ist maßbeständiger und elastischer. Er besitzt nicht die Eigenschaft des Quellens und der Wulstbildung und ist imstande, auftretenden Spannungen in dem in Frage kommenden Umfang zu widerstehen.

In Verfolg des erfinderischen Gedankens kann bei Berücksichtigung besonderer Umstände die Verfugung oder Verspachtelung der Fuge mit dem erfindungsgemäßen Fugenfüller zusätzlich auch unter Verwendung eines Bewehrungsstreifens erfolgen, der aus Zellulosefasern oder Kunststoffasern in Form eines Gewebes oder eines Vlieses erzeugt ist und der in die Fugenfüllermasse beim Verspachteln eingebettet wird.

Die Verarbeitung des Fugenfüllers geschieht in an sich bekannter Weise. Das Kantenprofil der aneinandergestoßenen Kanten der Gipskartonplatten ist erfindungsgemäß so gewählt, daß dort, wo die erforderliche Menge Fugenfüller in die Fuge eingebracht werden muß, ausreichend Raum vorhanden ist und daß dort, wo der Fugenfüller außerdem ästhetische oder architektonische Zwecke zu erfüllen hat, ein Mittelweg gegangen ist. Die in der Fugenausgestaltung auf der Ansichtsseite der Gipskartonplatte vorgesehene Abflachung ist erfindungsgemäß so getroffen, daß sie einer Fugenverspachtelung unter Verwendung der erfindungsgemäßen Fugenfüllermasse ohne Bewehrungsstreifen als auch mit Bewehrungsstreifen optimale Eigenschaften vermittelt.

Unter Berücksichtigung besonderer Umstände der Einwirkung von Kräften auf die Fuge, was in bestimmten Bauwerken oder unter bestimmten klimatischen oder sonstigen Bedingungen der Fall sein könnte, kann die Fuge ohne Bewehrungsstreifen gestaltet werden. Es ist im Rahmen des erfindungsgemäßen Fugenfüllers aber auch möglich, zusätzlich mit Bewehrungsstreifen zu arbeiten, so daß eine weitere Abstufung in den Festigkeitseigenschaften erzielt wird.

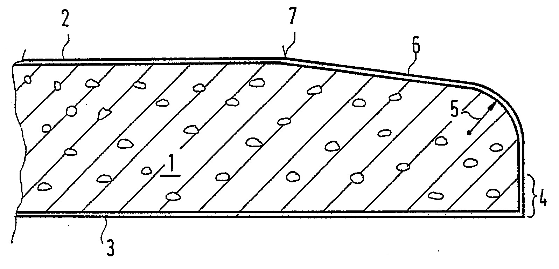

Zur besseren Erkenntnis der erfindungsgemäßen Kantenausgestaltung der Gipskartonplatte ist in der einzigen Zeichnung eine solche Kante in vereinfachter Weise dargestellt, was die Faltung des Kartons anbelangt.

In der einzigen Figur, die einen Schnitt durch die Kante einer Gipskartonplatte zeigt, bezeichnet das Bezugszeichen 1 den Gipskern und das Bezugszeichen 2 die Ansichtsseite und das Bezugszeichen 3 die Rückseite.

Der Einfachheit halber ist die Kartonummantelung so dargestellt, als würde sie kontinuierlich verlaufen. In Wirklichkeit ist jedoch der Karton der Ansichtsseite 2 am Rand nach innen gefaltet und der Karton der Rückseite ist etwas schmäler als die Platte breit ist und mit seinen Rändern auf den nach innen gefalteten Randstreifen des Kartons der Ansichtsseite 2 geklebt.

Dies ist aber für das Verständnis der Erfindung bzw. für die Wechselwirkung zwischen Karton und erfindungsgemäßem Fugenfüller unerheblich.

Das Kantenprofil der Kartonplatte ist nun so gestaltet, daß es bei einer Plattendicke von 12,5 mm einen rechtwinklig stehenden Teil in einer Breite von 3 bis 4 mm aufweist, der in der Zeichnung mit der Klammer 4 gekennzeichnet ist. Bei Dickerwerden der Platte verändert sich dieser senkrecht stehende Teil mit der Plattendicke.

Sodann schließt sich eine viertelkreisförmige Abrundung an, die einen gleichbleibenden Radius von 8 bis 10 mm besitzt und die in der Zeichnung mit dem Bezugszeichen 5 gekennzeichnet ist.

Diese Abrundung geht schließlich über in eine Abflachung 6, die eine Breitenausdehnung aufweist von 20 bis 40 mm, vorzugsweise 35 mm, und bis zur Stelle 7 reicht, an der sie in die Oberfläche der Platte einmündet, die parallel zur Rückseite verläuft.

Beim Aneinanderstoßen zweier solcher Kanten würde also spiegelbildlich auf der unter Berücksichtigung der Zeichnung rechten Seite noch einmal eine solche Kantengestalt vorhanden sein, wobei die Platten mit den rechtwinklig zur Rückseite verlaufenden Teilen 4 aneinanderstoßen, was für die Funktionstüchtigkeit der Fuge von großer Bedeutung ist, weil hier ein flächige Abstützung erfolgt und beispielsweise nicht, wie bei einer über die ganze Dicke verlaufenden Abrundung, ein Aufeinandertreffen von zwei scharfen Kanten.

Diese Abflachung bleibt in ihrer Breite and in ihrer Tiefe für alle Gipskartonplattenstärken praktisch unverändert groß, wie in der Beschreibung oben angeführt.

Der sich nun ergebende Fugenraum wird mit dem Fugenfüller verspachtelt, wobei der sonst übliche Bewehrungsstreifen entfallen kann.

Es ist zur erkennnen, daß die Tiefe dieser flachen V-förmigen Vertiefung aus den beiden Abflachungen der aneinanderstoßenden Kanten der Gipskartonplatte mit zunehmender Dicke der Platten sich nich verändert.

Obwohl das in der Zeichnung nicht dargestellt ist, ist es für jeden Fachmann klar, daß die Fuge in der Regel auf eine Unterlage zu liegen kommt, d. h. auf einen aus einem Metallprofil oder Kantholz bestehenden Stiel, wenn die Verarbeitung der Platte mit senkrecht verlaufender Fuge erfolgt.

**Patentansprüche**

1. Kantenausbildung und Fugenfüller zum Verspachteln einer durch das Aneinanderstoßen zweier solcher Kanten gebildeten Fuge von sogenannten Gipskartonplatten, dadurch gekennzeichnet, daß die Stirnfläche der Plattenkante ein zur Rückseite rechtwinklig stehendes Teil in einer Breite von 3 bis 4 mm bei 12,5 mm Plattendicke und eine sich anschließende viertelkreisförmige Abrundung mit einem Radius von 8 bis 10 mm aufweist, die in eine Abflachung mit einer Breite von 20 bis 40 mm auf der Ansichtsseite übergeht und einer Tiefe zur Normstärke an der Kante der Platte von 1 bis 3 mm, und daß eine so gebildete Fuge mit einem Fugenfüller folgender Zusammensetzung ausgefüllt ist 60 bis 90 Gew.-% Alpha-Gips

5 bis 35 Gew.-% feinteiliges Kalziumkarbonat

0,1 bis 0,4 Gew.-% eines Alkalisalzes einer Hydroxycarbonsäure

1,5 bis 2,0 Gew.-% Andicker in Form von Stärkeäther

0,3 bis 0,6 Gew.-% Wasserretentionsmittel in Form von Methylzellulose

2,5 bis 5,0 Gew.-% eines Gemisches eines Vinylpolymerisats und Polyvinylalkohol in Form eines Dispersionspulvers

0,5 bis 2,5 Gew.-% Fasern

und eine Beschleuniger/Verzögerer-Kombination sowie geringe Mengen eines Netzmittels und eines Polyelektrolyten, wobei bei Dickerwerden der Platte der Radius der Abrundung und die Abmessungen der Abflachung beibehalten werden, aber die Breite des senkrecht zur Rückseite stehenden Teils sich mit der Plattendicke verändert.

2. Kantenausbildung und Fugenfüller nach Anspruch 1, dadurch gekennzeichnet, daß der Fugenfüller Glas-, Zellulose- und/oder Kunststoffasern enthält, die einen Durchmesser von 5 bis 20 µm besitzen und Längen von mindestens 100 µm bis maximal 20 mm aufweisen.

**Claims**

1. Edge development and joint filler for stopping a joint caused by the abutment of two such edges of so-called gypsum plasterboards, characterised by the fact that the face of the board edge has a part standing at right angles to the back in a breadth of 3 to 4 mm with a board thickness of 12.5 mm and a following quadrant-shaped chamfer with a radius of 8 to 10 mm, which changes to a flat portion with a breadth of 20 to 40 mm on the visible side and a depth to standard strength on the edge of the board of 1 to 3 mm, and that a joint formed in this way is filled with a joint filler of the following composition
60 to 90% by weight of Alpha gypsum
5 to 35% by weight of fine grain calcium carbonate
0.1 to 0.4% by weight of an alkaline salt of carbonic acid
1.5 to 2.0% by weight of a thickener in the form of starch ether
0.3 to 0.6% by weight of a water-retention agent in the form of methylcellulose
2.5 to 5.0% by weight of a mixture of a vinyl polymer and polyvinyl alcohol in the form of a dispersion powder
0.5 to 2.5% by weight of fibres
and an accelerator/retarder combination as well as small quantities of gelifying agent and a polyelectrolyte, so that, when the board becomes thicker, the radius of the chamfer and the dimensions of the flat portion will be retained, but the breadth of the part standing perpendicular to the back will alter with the thickness of the board

2. Edge development and joint filler according to claim 1, characterised by the fact that the joint filler contains glass-, cellulose- and/or plastic fibres, which have a diameter of 5 to 20 µm and lengths of at least 100 µm to maximum 20 mm.

**Revendications**

1. Formation de bords et charge pour joints destinée au masticage d'un joint formé par la poussée l'un contre l'autre de deux bords de ce type de ce que l'on appelle des plaques de parement en plâtre, caractérisés en ce que la face frontale du bord des plaques présente une partie se trouvant à angle droit par rapport à la face dorsale, cette partie ayant une largeur de 3 à 4 mm dans le cas d'une épaisseur de plaque de 12,5 mm, et un arrondi en forme de quart de cercle lui faisant suite, d'un rayon de 8 à 10 mm, cet arrondi se transformant sur la face visible en un aplatissement d'une largeur de 20 à 40 mm et d'une profondeur correspondant à l'épaisseur normale de bord de plaque de 1 à 3 mm, et en ce que l'on remplit un joint ainsi formé avec une charge pour joint ayant la composition suivante, à savoir:
de 60 à 90% en poids de plâtre alpha
de 5 à 35% en poids de carbonate de calcium à grains fins
de 0,1 à 0,4% en poids d'un sel de métaux alcalins de l'acide hydroxycarboxylique
de 1,5 à 2,0% en poids d'agent épaississant sous forme d'éther d'amidon
de 0,3 à 0,6% en poids d'agent de rétention d'eau sous forme de méthyl-cellulose
de 2,5 à 5,0% en poids d'un mélange constitué d'un polymérisat vinylique et d'alcool polyvinylique sous forme d'une poudre de mise en dispersion
de 0,5 a 2,5% en poids de fibres
et une combinaison d'agent d'accélération/agent de ralentissement, ainsi que des quantités minimes d'un agent gelifiant et d'un polyélectrolyte, le rayon de la courbure et les dimensions de l'aplatissement étant maintenus constants dans le cas de plaques plus épaisses, tandis que la largeur de la partie se trouvant à angle droit par rapport à la face dorsale, se modifie avec l'épaisseur des plaques.

2. Formation de bords et charge pour joints selon là revendication 1, caractérisés en ce que la charge pour joints contient des fibres de verre, de cellulose et/ou de matière synthétique, ces fibres ayant un diamètre de 5 à 20 µm, tandis qu'elles présentent des longueurs d'au moins 100 µm et jusqu'à un maximum de 20 mm.